(19) Europäisches Patentamt
European Patent Office
Office européen des brevets

(11) EP 1 072 646 A1

(12) **EUROPEAN PATENT APPLICATION**

(43) Date of publication:
31.01.2001 Bulletin 2001/05

(51) Int Cl.7: **C08L 53/02**

(21) Application number: 00306386.4

(22) Date of filing: 27.07.2000

(84) Designated Contracting States:
AT BE CH CY DE DK ES FI FR GB GR IE IT LI LU MC NL PT SE
Designated Extension States:
AL LT LV MK RO SI

(30) Priority: 28.07.1999 JP 21436499
28.07.1999 JP 21436599

(71) Applicant: **Bridgestone Corporation**
Tokyo (JP)

(72) Inventors:
• **Maeda, Mitsuaki**
Hoya-shi, Tokyo 202-0022 (JP)
• **Izumoto, Ryuji**
Kokubunji-shi, Tokyo 185-0011 (JP)

(74) Representative: **Whalley, Kevin**
**MARKS & CLERK,**
**57-60 Lincoln's Inn Fields**
**London WC2A 3LS (GB)**

(54) **Asphalt modifier**

(57) There is provided an asphalt modifier including 3 to 80 parts by weight of a carbon black with a particle size of 75 μm or less, and 10 to 100 parts by weight of an oil, per 100 parts by weight of thermoplastic elastomer. Also there is provided a method for manufacturing the asphalt modifier by kneading a carbon black and an oil with a thermoplastic elastomer, in which the kneading temperature is set at 80 to 200 °C, the kneading time is set at 1 to 30 minutes, the shear rate during kneading is set at 50 to 800 (sec$^{-1}$), and the shear energy acting per cm$^3$ of carbon black during kneading is set at 200 to 3000 (J/cm$^3$).

EP 1 072 646 A1

**Description**

The present invention relates to an asphalt modifier for manufacturing a modified asphalt to be employed for pavement of a road, and a road surface treatment, the manufacturing method thereof, and a modified asphalt composition and a modified asphalt mixture using the same.

An asphalt mixture obtained by mixing an aggregate with an asphalt has been widely used as a paving material for a road or the like. The asphalt mixture is required to produce such a pavement that is less susceptible to problems of "rutting" due to the softening thereof in the summer period, "cracking" and "stone flying" due to the hardening thereof in the winter period, "wear", and the like. However, especially because of an increase in the amount of traffic of heavy vehicles and an increase in number of vehicles with tire chains in the winter period, in recent years, it is required to show a further improvement in such performances.

For this reason, the modified asphalt generally referred to as a modified I type or a modified II type has come into increasing use in recent years which has achieved a higher strength and a higher viscosity by dispersing a rubber such as styrene-butadiene copolymer rubber (SBR) and a thermoplastic elastomer such as a styrene-butadiene-styrene block copolymer (SBS) in an asphalt. Further, a high-value-added pavement such as low-noise or high drainage pavement has spread in recent years. Thus, a modified asphalt referred to as a high viscosity binder having a further increased viscosity has also come into use as the asphalt employed for such a paving material.

However, in the mixture in which the rubber and the thermoplastic elastomer are mixed, because of differences in specific gravity and SP (solubility parameter) value, separation tends to occur in such a manner that the rubber and the thermoplastic elastomer separates out to the upper layer, while the asphalt separates out to the lower layer, due to the static stored state under high temperatures where the mixture melts, thereby making it difficult to obtain a desired performance.

As the means for solving the foregoing problems, there are proposed (1) a method in which the tendency to separate is inhibited by mixing a mineral oil and a petroleum resin therein (Japanese Patent Laid-Open Publication No. 6-107953); (2) a method in which a rubber and an elastomer are mixed in large amounts in the asphalt; and (3) a method in which carbon black is charged during stirring.

However, with the foregoing methods (1) and (2), no effect is produced unless the rubber and the elastomer, or the mineral oil and the petroleum resin are mixed therein in large amounts. For this reason, there occur the following problems. An increase in cost is inevitably incurred; and further, the balance between required characteristics such as penetration, softening point, toughness, viscosity, and ductility cannot be kept by mixing the ingredients in still larger amounts. With the method (3), the carbon black is required to be stirred with the asphalt for a longer period of time in order to be sufficiently dispersed therein, while it precipitates and adheres to the inside of a pipe or the bottom of a tank in a stirring apparatus, or the like. Thus, there occur problems in manufacturing.

Further, as a means for solving the problems, there is proposed an asphalt modifier which has been formed into a composite by homogeneously mixing a carbon black into a thermoplastic elastomer prior to stirring and mixing the asphalt and the thermoplastic elastomer (Japanese Patent Laid-Open Publication No.10-195301).

With the method described in the above publication, it becomes possible to inhibit the separation during storage without presenting the foregoing problems in manufacturing of an increased stirring time, adhesion, and the like, due to the aforesaid mixing of carbon black. However, for the reasons that kneading must be carried out with a certain degree of shear force for obtaining the effect of carbon black, and the like, degradation such as molecular chain breaking occurs in the thermoplastic elastomer. Consequently, sufficient improvement effects cannot be obtained in terms of keeping the balance between separation inhibition and other required characteristics such as penetration, softening point, toughness, viscosity, and ductility.

It is therefore an object of the present invention to provide an asphalt modifier which will not separate even when stored for a long time, and further which is capable of keeping a balance of a high order with other required characteristics, a manufacturing method thereof, and a modified asphalt composition and a modified asphalt mixture using the same.

The present inventors have conducted a close study to solve the foregoing problems. As a result, they have found that the above object can be achieved by implementing the following structure, and have completed the present invention.

Namely, an asphalt modifier of the present invention is characterized in that 3 to 80 parts by weight of a carbon black with a particle size of 75 μm or less, and 10 to 100 parts by weight of an oil are mixed for every 100 parts by weight of a thermoplastic elastomer.

In the asphalt modifier of the present invention, the aforesaid thermoplastic elastomer is preferably an SBS. The SBS is preferably of a high molecular weight type with a number-average molecular weight of 120,000 to 500,000. Alternatively, it is preferred that it is comprised of two polymers, i.e., the one of this high molecular weight type, and a low molecular weight type having a number-average molecular weight of 60,000 to 120,000, and that the one of the low molecular weight type is present in an amount of 70 % by weight or less.

Further, a method for manufacturing an asphalt modifier of the present invention includes the step of kneading a carbon black and an oil with a thermoplastic elastomer. The method is characterized on that the kneading temperature is set at 80 to 200 °C, that the kneading time is set at 1 to 30 minutes, that the shear rate during kneading is set at 50 to 800 (sec$^{-1}$), and that the shear energy acting per cm$^3$ of carbon black during kneading is set at 200 to 3000 (J/cm$^3$).

In the method for manufacturing an asphalt modifier of the present invention, it is preferred that, the kneading temperature is set at 100 to 170 °C, the kneading time is set at 2 to 25 minutes, the shear rate during kneading is 200 to 600 (sec$^{-1}$), and that the shear energy acting per cm$^3$ of carbon black during kneading is set at 300 to 2000 (J/cm$^3$). Further, it is preferred that a carbon black subjected to a granulation treatment is used. In this case, the maximum value of the torque acting per cm$^3$ of carbon black during kneading is required to be set at 2 to 50 (kgf/cm$^2$). Still further, it is also preferred that the knead material is pelletized so as to have a surface profile with no smoothness after kneading.

A method for manufacturing a modified asphalt of the present invention is characterized by: under such a condition that a kneading machine for an asphalt modifier and an asphalt mixing apparatus are both installed, the steps of manufacturing an asphalt modifier by means of the kneading machine in accordance with the aforesaid method for manufacturing an asphalt modifier; and then charging the asphalt modifier directly into the asphalt mixing apparatus.

Further, a modified asphalt composition of the present invention comprises 3 to 30 parts by weight of the aforesaid asphalt modifier and 97 to 70 parts by weight of an asphalt.

Furthermore, a modified asphalt mixture of the present invention comprises a mixture of the aforesaid modified asphalt composition and an aggregate.

The asphalt modifier of the present invention will not separate even when stored for a long time, and further it is capable of keeping a balance of a high order with other required characteristics such as penetration, softening point, toughness, viscosity, and a ductility. Therefore, a modified asphalt composition using such an asphalt modifier, and a modified asphalt mixture obtained by mixing the same with an aggregate are very useful for road pavement and a road surface treatment.

Hereinafter, embodiments of the present invention will be described.

An asphalt modifier of the present invention is obtained in the following manner. Namely, 3 to 80 parts by weight, preferably 4 to 60 parts by weight, and more preferably 5 to 40 parts by weight of a carbon black, and 10 to 100 parts by weight, preferably 20 to 80 parts by weight, and more preferably 30 to 70 parts by weight of an oil are mixed with every 100 parts by weight of a thermoplastic elastomer to form a composite material.

When the amount of the carbon black to be added is less than 3 parts by weight, the effect of inhibiting separation during storage cannot be obtained sufficiently. On the other hand, when it exceeds 80 parts by weight, the resulting modified asphalt becomes rigid, resulting in an increase in melt viscosity, a reduction in ductility at 15 °C, and further a degradation in low temperature Cantabro performance showing a stone flying property in cold climates.

Further, when the amount of the oil to be added is less than 10 parts by weight, the resulting modified asphalt has a decreased elongation, resulting in degradation in performances such as ductility, toughness, and tenacity, as well as resulting in a remarkable increase in melt viscosity. On the other hand, when it exceeds 100 parts by weight, the resulting modified asphalt has decreased strength and viscosity, resulting in degradation in performances such as toughness, tenacity, and viscosity at 60 °C. Further, self-adhesion (tacking) occurs in the modifier due to the addition of an excessive amount of an oil, presenting problems in handling as a material, and workability during manufacturing.

Below, the components of the present invention will be described in details.

(1) Thermoplastic elastomer

Synthetic rubbers such as styrene-butadiene-styrene block copolymer (SBS), styreneisoprene-styrene block copolymer (SIS), and styrene-ethylene-butylene-styrene block copolymer (SEBS) can be used alone, or in appropriately selected combination of two or more thereof. The SBS is particularly effective out of these.

Among SBSs, the one of a high molecular weight type with a number-average molecular weight of preferably 120,000 to 500,000, more preferably 120,000 to 400,000, and most preferably 120,000 to 300,000 is desirable. Further, in the present invention, it is effective that, in addition to the one of such a high molecular weight type, the one of a low molecular weight type having a number-average molecular weight of, preferably 60,000 to 120,000, and more preferably 80,000 to 110,000 is contained in an amount of 70 % by weight or less, preferably 60 to 10 % by weight, and more preferably 50 to 20 % by weight based on the total amount of the SBS.

Essentially, an SBS of a high molecular weight type, which exhibits high mechanical performances when used alone, is effective for modification of the asphalt mechanical performances such as toughness and tenacity, required of a thermoplastic elastomer. Meanwhile, it is important for the modification of performances such as separation inhibition during storage, and viscosity at 60 °C that the thermoplastic elastomer is dispersed in the asphalt as homogeneously as possible. In this regard, the SBS of a low-molecular weight type having a high affinity with the asphalt is effective. Therefore, by using both types of the SBSs in combination, a total balance of a higher order among performances required of the modified asphalt can be kept. Here, when an SES having a number-average molecular weight exceeding 500,000 is used, the viscosity at the time of melting of the modified asphalt increases. Consequently, the handling thereof is adversely affected, and an insufficient dispersion tends to occur at a process of mixing with an aggregate. Further, when the number-average molecular weight is less than 60,000, the effect of modifying the asphalt cannot be obtained, and hence the mixing of the SBS will count for nothing.

(2) Carbon black

When carbon black is used as it is, it tends to be released into air. Therefore, the workability might be reduced, and a deviation from the formulation of the modifier might be caused. For these reasons, it is desirable to use a carbon black subjected to a granulation treatment. When the granulated carbon black is compounded with the thermoplastic elastomer for composite formation to manufacture a modifier, by allowing the shear force for kneading to be exerted, it must be divided into fine particles with a particle size of 75 μm or less to be present in the modifier. The carbon black with a particle size exceeding 75 μm, i.e., in a near initial granulated state is not homogeneously dispersed in the modifier. As a result, the desired effect of inhibiting separation during storage cannot be obtained sufficiently. Further, if carbon black with a large particle size is present in the modified asphalt, it acts as a foreign matter, causing degradation in toughness, tenacity, ductility, and room temperature and low temperature Cantabro performances. In the modifier thus manufactured, the mean particle size of the aggregate of carbon black is 5 μm or less in circle-equivalent diameter from a SEM image.

(3) Oil

The oil has no particular restriction as to the type thereof, and oils used for a conventional asphalt can be mixed. Among them, an aromatic oil having an aromatic carbon with a ring analysis result of 36 % or more can be preferably used out of petroleum oils comprised of three compositions of an aromatic ring, a naphthene ring, and a paraffin ring.

Then, a method for manufacturing an asphalt modifier of the present invention will be described.

In the present invention, both of the carbon black and the oil are kneaded with the thermoplastic elastomer. Since the oil exerts a plasticizer-like effect on the thermoplastic elastomer, it is possible to achieve a kneading process where molecular chain breaking is less likely to occur.

Further, in order to homogeneously disperse the carbon black and the oil in the thermoplastic elastomer, and not to degrade the thermoplastic elastomer, the kneading temperature is set at 80 to 200 °C, preferably 100 to 170 °C, and more preferably 110 to 150 °C. When the kneading temperature is less than 80 °C, melting of the thermoplastic elastomer is insufficient, and the carbon black and the oil are not homogeneously dispersed therein. As a result, desired performance is not exhibited. On the other hand, when it exceeds 200 °C, the degradation of the thermoplastic elastomer due to heat proceeds, resulting in degradation in performances.

Further, the kneading time is set at 1 to 30 minutes, preferably 2 to 25 minutes, and more preferably 3 to 20 minutes. When the kneading time is less than 1 minute, it is too short for the carbon black and the oil to be homogeneously dispersed therein. As a result, desired performance is not exhibited. On the other hand, when it exceeds 30 minutes, molecular chain breaking of the polymer proceeds. Accordingly, the performances thereof tend to be degraded. Since kneading for a still longer time directly affects the cost increase in manufacturing, it is not appropriate to perform kneading for a longer time than necessary.

Still further, the shear rate during kneading of the modifier is set at 50 to 800 $(\text{sec}^{-1})$, and preferably 200 to 600 $(\text{sec}^{-1})$. When the shear rate is less than 50 $(\text{sec}^{-1})$, the kneading effect is insufficient, and the carbon black and the oil are not homogeneously dispersed in the thermoplastic elastomer. As a result, desired performance is not exhibited. On the other hand, when it exceeds 800 $(\text{sec}^{-1})$, the carbon black and the oil are homogeneously dispersed therein. However, since the kneading effect is too high, molecular chain breaking of the thermoplastic elastomer occurs, resulting in degradation in performances.

Furthermore, the shear energy acting per $\text{cm}^3$ of carbon black is set at 200 to 3000 $(\text{J/cm}^3)$, and preferably 300 to 2000 $(\text{J/cm}^3)$. When the shear energy is less than 200 $(\text{J/cm}^3)$, the whole of carbon black cannot be made into fine particles, and the carbon black in a near initial granulated state, with a particle size exceeding 75 μm is present. Consequently, the desired effect of inhibiting separation during storage cannot be obtained sufficiently. Further, it acts as a foreign matter, causing degradation in toughness, tenacity, ductility, and room temperature and low temperature Cantabro performances. On the other hand, when it exceeds 3000 $(\text{J/cm}^3)$, the molecular chain breaking of the polymer proceeds. Accordingly, the performances tend to be degraded. Further, the power consumption in the kneading process increases with an increase in the amount of shear energy to be applied, incurring a cost increase. Therefore, the shear energy larger than necessary is not preferred.

As for the carbon black to be used in the present invention, when it is used as it is, it may be released into air during manufacturing. Therefore, the workability may be reduced, and a deviation from the formulation of the modifier may be caused. For this reason, it is desirable that a carbon black is subjected to a granulation treatment. Various studies thereon prove the following fact. That is, in manufacturing a modifier by compounding the granulated carbon black with the thermoplastic elastomer for composite formation, an improvement effect cannot be obtained sufficiently unless the carbon black is made into fine particles with a particle size of 75 μm or less. Therefore, it is effective that the maximum value of the torque acting per $cm^3$ of carbon black during kneading is 2 to 50 (kgf/$cm^2$), and preferably 3 to 30 (kgf/$cm^2$). When the maximum torque is less than 2 (kgf/$cm^2$), the shear force for breaking the granulated state of the carbon black is insufficient, and hence the carbon black in a near initial granulated state, with a particle size exceeding 75 μm is present. Consequently, the desired effect of inhibiting separation during storage cannot be obtained sufficiently. Further, it acts as a foreign matter, causing degradation in toughness, tenacity, ductility, and room temperature and low temperature Cantabro performances. On the other hand, when the maximum torque exceeds 50 (kgf/$cm^2$), the molecular chain breaking of the polymer proceeds, resulting in degradation in performances.

Further, in the present invention, it is desirable that the modifier is pelletized so as to have a surface profile with no smoothness after kneading. In the manufacturing method of the present invention, since an oil is included in the system, self-adhesion occurs in the modifier. For this reason, when the modifier is actually manufactured, packed in a bag, and then stored, self-adhesion between pellets occurs. Consequently, the modifier becomes difficult to handle. Against such a problem, it is effective to devise a solution in the mixing process, including a decrease in the amount of the oil to be charged, and to use a blocking inhibitor. However, these solutions cause other problems as follows. Namely, the amount of the oil to be charged largely affects the effect of modifying an asphalt which is originally required of the modifier, while the use of the blocking inhibitor resulting in a cost increase. In contrast, it is found that the self-adhesion can be largely improved without causing another problem by pelletizing the surface of the modifier into a smoothness-free state.

Namely, as with conventional resins, the one obtained by pelletizing a material after extrusion by a twin-screw extruder or a kneader router, or the one obtained by cutting and pelletizing the material molded in a sheet form by a roll, or the like has a smoothness on the surface, and hence self-adhesion occurs, causing the foregoing problems. However, the one which has been intentionally pelletized so as to have no smoothness exhibits almost no self-adhesion. Therefore, it becomes possible to handle in the same manner as in the case of a conventional thermoplastic elastomer. Examples of the manufacturing method of a pellet with no smoothness include: a method in which a cutout, or the like is provided at the extrusion port of a twin screw extruder or a kneader router to eliminate the smoothness; a method in which a component which will vaporize, such as a foaming agent, is included in the material to produce a porous pellet; and a method in which the material is freeze-ground with liquid nitrogen, or the like to produce amorphous ground pellets. However, even with other methods, the same self-adhesion improving effect can be obtained so long as pellets with no smoothness can be manufactured.

Further, in the present invention, more desirably, a kneading machine for the asphalt modifier and an asphalt mixing apparatus are both installed. Thus, the asphalt modifier manufactured by kneading is directly charged into the asphalt mixing apparatus to manufacture a modified asphalt. This process eliminates the problems of handling the asphalt modifier, including the foregoing self-adhesion problem. Further, the pelletization process in manufacturing of the asphalt modifier can be omitted. In addition, since the asphalt modifier is charged in a high temperature state, it is homogeneously dissolved in the asphalt for a shorter time. Consequently, a cost decrease effect can be obtained. By manufacturing the modified asphalt with this method, the foregoing means for improving the self-adhesion, i.e., formation of a pellet with no smoothness becomes unnecessary.

The machines employable for kneading in the present invention should have no particular restriction as long as they satisfy the conditions of the present invention. However, kneading by a roll, or the like is not appropriate in terms of the nature of the working, and a kneader, a Banbury mixer, a twin screw extruder, and the like are preferred. Incidentally, in the twin screw extruder, although various screw segments can be used in combination, it is not required to apply the shear in accordance with the present invention at all the screw segments, and it is sufficient that a prescribed shear force is exerted at a portion where a kneading effect is required to be exerted.

In the modified asphalt composition of the present invention, it is effective that 97 to 70 parts by weight, and preferably 95 to 80 parts by weight of an asphalt, and 3 to 30 parts by weight, and preferably 5 to 20 parts by weight of an asphalt modifier are mixed. The components can be appropriately mixed within these ranges to be used as an asphalt for pavement such as a modified I type, modified II type, or a high viscosity binder.

Asphalt has no particular restriction, and there can be used commonly available asphalts such as straight asphalt, semi-blown asphalt, blown asphalt, cut-back asphalt to which asphalt emulsion, tar, pitch, oil, and the like are added, and recycled asphalt. These asphalts can be used alone, or in combination of two or more thereof. Alternatively, the asphalt may also be a decolored asphalt.

Further, for the modified asphalt composition of the present invention, there can be appropriately used elastomers such as natural rubber (NR), styrene-butadiene copolymer rubber (SBR), and polybutadiene rubber (BR), higher fatty acid amides, higher fatty acid salts, polyolefins, resin compounds, inorganic compounds, antioxidants, ultraviolet absorbers, light stabilizers, peeling inhibitors, fiber reinforcing agents, elasticity improvers, viscosity depressants, viscosity improvers, pigments, and softening agents.

Examples

The following examples are given for the purpose of illustration of this invention and are not intended as limitations thereof.

Examples 1 to 4, and Comparative Examples 1 to 4

The thermoplastic elastomers, carbon blacks, and oils used for preparation of asphalt modifiers, and asphalts of Examples 1 to 4, and Comparative Examples 1 to 4 are as follows.

(1) Thermoplastic elastomer

High molecular weight type SBS (KRATON D-1101, manufactured by Shell Japan Co.): Number-average molecular weight: 143,000
Low molecular weight type SBS (Toughprene 125, manufactured by Asahi Chemical Industry Co., Ltd.): Number-average molecular weight: 100,000

(2) Carbon black (N330, manufactured by Asahi Carbon Co.)

(3) Oil (Comolex 300, manufactured by Nippon Petroleum Refining Co., Ltd.)

(4) Asphalt (Straight asphalt 60/80, manufactured by Showa Shell Oil Co., Ltd.)

In manufacturing of the asphalt modifier, the ingredients were kneaded and compounded for composite formation at about 130 °C in a small type plast mill ("BR250", manufactured by Toyo Seiki Co.) in accordance with the formulations of Tables 1 and 2 to manufacture a composite material pellet. The asphalt modifier thus obtained and an asphalt were stirred and kneaded at 180 °C by means of a T.K. Homomixer of the Mark II 20 type manufactured by Tokusyu Kika Kogyo Co., Ltd., to manufacture a modified asphalt composition where the ratio of modifier / asphalt was 15 / 85 (weight ratio).
Further, such a modified asphalt composition and an aggregate were mixed at 180 °C by means of a vertical asphalt mixer to manufacture an asphalt mixture where the ratio of modified asphalt composition : aggregate was 5 : 95 (weight ratio).
The resulting asphalt modifier, the modified asphalt composition using the same, and the asphalt mixture were evaluated for the following characteristics.

1. Particle size of the carbon black in the asphalt modifier (whether or not to be 75 µm or less)

The evaluation was carried out in accordance with the following procedure.

(1) About 0.5 g of the asphalt modifier is weighed to the fourth decimal place, and the weighed value is taken as (A);
(2) The weighed asphalt modifier is immersed in about 100 ml of toluene to be allowed to stand for a week;
(3) A solution of the asphalt modifier dissolved in toluene is filtered through a 200-mesh wire gauze made of stainless steel (passable at 75 µm or less), which has been previously weighed to the fourth decimal place, and whose weighed value is taken as (B), to separate a carbon black with a particle size exceeding 75 µm;
(4) After filtration, the filtered material is placed in a vacuum desiccator together with the wire gauze to be vacuum dried at 70 °C for 24 hours. Then, the weight thereof after drying is weighed to the fourth decimal place, and the weighed value is taken as (C); and
(5) By subtracting the weighed values (A) and (B) from the weighed value (C), the weight of the carbon black which has not passed through the 200-mesh wire gauze is obtained, and it is then subtracted from the weight of the carbon black originally included in the asphalt modifier to calculate the weight of the carbon black with a particle size of 75 µm or less, which has passed the 200-mesh wire gauze, thereby determining the percentage of passage. It is noted that, even when the particle size is determined to be 75 µm or less from measurement, less than 3 % of the carbon black adheres to the mesh. Taking the effect into account, the case where the passage ratio is 97 % or more is indicated by a mark "O", assuming that the whole carbon black has a particle size of 75 µm or less.

On the other hand, the case where the passage ratio is less than 97 % is indicated by a mark " × ", assuming that some of the carbon black has a particle size of 75 μm or more.

2. Characteristics of the modified asphalt composition

(1) Anti-separation performance

The evaluation was carried out in accordance with the following procedure.

1. The modified asphalt in a heated state immediately after manufacturing is gently transferred into a 250-ml aluminum can;
2. The can is allowed to stand in a 160 °C oven for 24 hours. In this step, the can is tightly sealed with aluminum foil in order to prevent the release due to volatilization;
3. The can is then taken out, and allowed to cool down to room temperature. Thereafter, the can is cut along the length thereof so that the rupture cross section passes through the center thereof into two semi-cylindrical bodies;
4. For either one of the semi-cylindrical bodies, the ruptured surface of the modified asphalt composition is subjected to drying with a commonly available dryer for about 1 minute, so that the two lower and upper layers can be visually classified; and
5. For the ruptured surface subjected to the foregoing treatment, the area ratio of the upper layer occupies in the whole area is determined in percentage, and it is taken as the anti-separation performance. The higher the value is, the higher the performance is.

(2) Toughness / tenacity

The measurement was carried out in accordance with "3-5-17 Toughness / tenacity test method" in "Pavement Test Method Manual" published by Japan Road Association. The higher the value is, the higher the performance is.

(3) 60 °C Viscosity

The measurement was carried out in accordance with "3-5-11 60 °C Viscosity test method" in "Pavement Test Method Manual" published by Japan Road Association. The higher the value is, the more effective and desirable it is with respect to "rutting".

(4) 180 °C Viscosity

The measurement was carried out in accordance with "3-5-10 High temperature kinematic viscosity test method" in "Pavement Test Method Manual" published by Japan Road Association. The lower the value is, the more excellent and desirable the handling in manufacturing is.

(5) 15 °C Ductility

The measurement was carried out in accordance with "3-5-3 Ductility test method" in "Pavement Test Method Manual" published by Japan Road Association. The higher the value is, the more desirable it is.

3. Characteristics of the modified asphalt mixture

Room temperature Cantabro and low temperature Cantabro
In accordance with the Cantabro test method described in "Guide For Drainage Pavement Technology (Appendix-6)" published by Japan Road Association, the Cantabro loss ratios (aggregate scattering resistances) at temperatures of 20 °C and -10 °C were measured to be taken as a room temperature Cantabro and a low temperature Cantabro, respectively. The lower the Cantabro loss ratio is, the higher the performance is.

4. Overall evaluation

The target figure of each performance is set as follows, and the overall evaluation was carried out whereby a mark "○" is given to the one which has attained all the targets, and a mark " × " is given to the one which could not attained at least one target.

| Anti-separation performance | 80 (%) or more |
|---|---|
| Toughness | 200 (kgf × cm) or more |
| Tenacity | 150 (kgf × cm) or more |
| 60 °C Viscosity | 1000,000 (poise) or more |
| 180 °C Viscosity | 700 (cSt) or less |
| 15 °C Ductility | 60 (cm) or more |
| Room temperature Cantabro | 10 (%) or less |
| Low temperature Cantabro | 30 (%) or less |

The results obtained are shown in both Tables 1 and 2.

[Table 1]

| | | Example 1 | Example 2 | Example 3 | Example 4 |
|---|---|---|---|---|---|
| Formulation | High M.W. SBS | 65 | 100 | 65 | 65 |
| | Low M.W. SBS | 35 | 0 | 35 | 35 |
| | Carbon Black | 10 | 10 | 70 | 10 |
| | Oil | 50 | 50 | 50 | 90 |
| Whether or not particle size of the carbon black is 75 $\mu$ m or less | | ○ | ○ | ○ | ○ |
| Performances | Anti-separation performance | 100 | 100 | 100 | 100 |
| | Toughness | 286 | 281 | 249 | 217 |
| | Tenacity | 216 | 210 | 177 | 188 |
| | 60 ℃ Viscosity ($\times 10^4$) | 251 | 169 | 518 | 142 |
| | 180 ℃ Viscosity | 471 | 611 | 635 | 340 |
| | 15 ℃ Ductility | 86 | 70 | 72 | 105 |
| | Room temperature Cantabro | 5 | 5 | 6 | 6 |
| | Low temperature Cantabro | 17 | 22 | 21 | 20 |
| Overall Evaluation | | ○ | ○ | ○ | ○ |

[Table 2]

| | | Comparative Example 1 | Comparative Example 2 | Comparative Example 3 | Comparative Example 4 |
|---|---|---|---|---|---|
| Formulation | High M.W. SBS | 65 | 65 | 100 | 65 |
| | Low M.W. SBS | 35 | 35 | 0 | 35 |
| | Carbon Black | 0 | 10 | 0 | 10 |
| | Oil | 50 | 0 | 50 | 50 |
| Whether or not particle size of the carbon black is 75 μm or less | | - | ○ | - | × |
| Performances | Anti-separation performance | 54 | 100 | 42 | 67 |
| | Toughness | 215 | 195 | 242 | 185 |
| | Tenacity | 151 | 112 | 185 | 115 |
| | 60 ℃ Viscosity ( × 10⁴) | 211 | 394 | 140 | 232 |
| | 180 ℃ Viscosity | 463 | 905 | 607 | 469 |
| | 15 ℃ Ductility | 88 | 50 | 72 | 68 |
| | Room temperature Cantabro | 6 | 5 | 7 | 15 |
| | Low temperature Cantabro | 22 | 17 | 29 | 49 |
| Overall Evaluation | | × | × | × | × |

The above test results indicate the following facts.

Namely, in Examples 1 to 4, the targets could be satisfied in all the performances, and good performance balances could be achieved. In contrast, in Comparative Examples 1 and 3, since no carbon black was included, the anti-separation performances were remarkably degraded. Further, in Comparative Example 2, since no oil was included, the melt viscosity was remarkably increased, and the ductility was also largely degraded. Still further, in Comparative Example 4, since the carbon black with a particle size of 75 μm or more was present therein, the anti-separation performance improvement due to carbon black was not shown, and other performances were also degraded.

Example 5, and Comparative Examples 5 to 9

The thermoplastic elastomers, carbon blacks, and oils used for preparation of asphalt modifiers, and asphalts of Example 5, and Comparative Examples 5 to 9 are as follows.

(1) Thermoplastic elastomer

High molecular weight type SBS (KRATON D-1101, manufactured by Shell Japan Co.) Low molecular weight type SBS (Toughprene 125, manufactured by Asahi Chemical Industry Co., Ltd.)

(2) Carbon black (N330, manufactured by Asahi Carbon Co.)

(3) Oil (Comolex 300, manufactured by Nippon Petroleum Refining Co., Ltd.)

(4) Asphalt (Straight asphalt 60/80, manufactured by Showa Shell Oil Co., Ltd.)

The formulation of the asphalt modifier obtained by mixing the ingredients (1) to (3) is shown in Table 3 below.

[Table 3]

|  | Formulation (parts by weight) |
| --- | --- |
| KRATON D-1101 | 65 |
| Toughprene 125 | 35 |
| N330 | 10 |
| Comolex 300 | 50 |

In manufacturing of the asphalt modifier, a small type plast mill ("BR250", manufactured by Toyo Seiki Co.) was used under the conditions shown in Table 4. After kneading, the sample was freeze-ground with liquid nitrogen to manufacture ground pellets.

The asphalt modifier thus obtained and the asphalt (4) described above were stirred and kneaded at 180 °C by means of a T.K. Homomixer of the Mark II 20 type manufactured by Tokusyu Kika Kogyo Co., Ltd., to manufacture a modified asphalt composition where the ratio of modifier / asphalt was 15 / 85 (weight ratio).

Further, such a modified asphalt composition and an aggregate were mixed at 180 °C by means of a vertical asphalt mixer to manufacture an asphalt mixture where the ratio of modified asphalt composition : aggregate was 5 : 95 (weight ratio).

The resulting asphalt modifier, the modified asphalt composition using the same, and the asphalt mixture were evaluated for the characteristics in the same manner as described above.

It is indicated that the calculation of the shear rate ($\gamma$) in the table is expressed as the following equation:

$$\gamma = (\pi \times D \times N)/(60h)$$

(where $\pi$ denotes the ratio of the circumference of a circle to its diameter, D denotes the cylinder diameter (mm), N denotes the number of revolutions (r.p.m.), and h denotes the clearance (mm) between screw and cylinder).

The torque per $cm^3$ of carbon black was determined by reading a torque value from the instrument, and dividing it by the charge volume.

Further, the shear energy (W) per $cm^3$ of carbon black is expressed as the following equation:

$$W = 2\pi \times (N/60) \times 9,8 \times T \times t$$

(where T denotes the torque (kgf • cm) read from the instrument, and t denotes the time (sec).)

[Table 4]

| | | Example 5 | Comparative Example 5 | Comparative Example 6 | Comparative Example 7 | Comparative Example 8 | Comparative Example 9 |
|---|---|---|---|---|---|---|---|
| Manufacturing Condition | Kneading Temp (℃) | 130 | 60 | 130 | 130 | 130 | 130 |
| | Kneading Time (min.) | 15 | 9 | 25 | 11 | 40 | 3 |
| | Shear Rate (sec$^{-1}$) | 400 | 400 | 30 | 1000 | 400 | 400 |
| | Maximum Torque (kgf/cm$^2$) | 12 | 22 | 5 | 18 | 1 | 8 |
| | Shear Energy (J/cm$^3$) | 1000 | 1000 | 1000 | 1000 | 1000 | 100 |
| Whether or not particle size of the carbon black is 75 $\mu$ m or less | | ◯ | ◯ | × | ◯ | × | × |
| Performances | Anti-separation performance | 100 | 58 | 63 | 100 | 67 | 73 |
| | Toughness | 286 | 236 | 168 | 184 | 185 | 191 |
| | Tenacity | 216 | 147 | 108 | 136 | 115 | 138 |
| | 60 ℃ Viscosity ($\times 10^4$) | 251 | 228 | 230 | 172 | 232 | 230 |
| | 180 ℃ Viscosity | 471 | 455 | 465 | 405 | 469 | 465 |
| | 15 ℃ Ductility | 86 | 74 | 65 | 76 | 68 | 70 |
| | Room temperature Cantabro | 5 | 10 | 14 | 11 | 15 | 13 |
| | Low temperature Cantabro | 17 | 30 | 50 | 36 | 49 | 41 |
| Overall Evaluation | | ◯ | × | × | × | × | × |

The above test results indicate the following facts.

Namely, in Example 5, the targets were satisfied in all the performances, and the good performance balance could be achieved. In contrast, in Comparative Example 5, the kneading temperature was too low, and hence the carbon black and the oil were not homogeneously dispersed therein. Accordingly, the anti-separation performance was largely degraded, and other performances were also degraded. As for Comparative Examples 6, 8, and 9, since the carbon black in a near initial granulated state, with a particle size exceeding 75 μm, was included, the effect of improving the anti-separation performance was insufficient. In addition, since the carbon black with a large particle size acted as a foreign matter, various performances were degraded. Further, in Comparative Example 7, the carbon black was satisfactorily dispersed therein, resulting in a large improvement in anti-separation performance. However, the toughness, tenacity, and low temperature Cantabro were degraded due to the molecular chain breaking of the thermoplastic elastomer resulting from shearing.

As described in details above, the present invention can provide an asphalt modifier which will not separate even when stored for a long time, and which is capable of keeping a balance of a high order between all the required characteristics other than the anti-separation performance.

While there has been described what are at present considered to be preferred embodiments of the present invention, it will be understood that various modifications may be made thereto, and it is intended that the appended claims cover all such modifications as fall within the true spirit and scope of the invention.

**Claims**

1.  An asphalt modifier comprising: 100 parts by weight of a thermoplastic elastomer, 3 to 80 parts by weight of a carbon black with a particle size of 75 μm or less, and 10 to 100 parts by weight of an oil, per 100 parts by weight of said thermoplastic elastomer.

2. The asphalt modifier according to claim 1, wherein said thermoplastic elastomer is a styrene-butadiene-styrene block copolymer.

3. The asphalt modifier according to claim 2, wherein said styrene-butadiene-styrene block copolymer has a number-average molecular weight of 120,000 to 500,000.

4. The asphalt modifier according to claim 2, wherein said styrene-butadiene-styrene block copolymer is comprised of two polymers of a high molecular weight type having a number-average molecular weight of 120,000 to 500,000, and a low molecular weight type having a number-average molecular weight of 60,000 to 120,000, and said polymer of the low molecular weight type is present in an amount of 70 % by weight or less.

5. A method for manufacturing an asphalt modifier comprising: kneading a carbon black and an oil with a thermoplastic elastomer,
   the kneading temperature being set at 80 to 200 °C, the kneading time being set at 1 to 30 minutes, the shear rate during kneading being set at 50 to 800 $(sec^{-1})$, and the shear energy acting per $cm^3$ of carbon black during kneading being set at 200 to 3000 $(J/cm^3)$.

6. The method for manufacturing an asphalt modifier according to claim 5, wherein the kneading temperature is set at 100 to 170 °C.

7. The method for manufacturing an asphalt modifier according to claim 5, wherein the kneading time is set at 2 to 25 minutes.

8. The method for manufacturing an asphalt modifier according to claim 5, wherein the shear rate during kneading is set at 200 to 600 $(sec^{-1})$.

9. The method for manufacturing an asphalt modifier according to claim 5, wherein the shear energy acting per $cm^3$ of carbon black during kneading is set at 300 to 2000 $(J/cm^3)$.

10. The method for manufacturing an asphalt modifier according to claim 5, wherein the carbon black is one subjected to a granulation treatment to be used.

11. The method for manufacturing an asphalt modifier according to claim 10, wherein the maximum value of the torque acting per $cm^3$ of carbon black during kneading is set at 2 to 50 $(kgf/cm^2)$.

12. The method for manufacturing an asphalt modifier according to claim 5, wherein the kneaded material is pelletized so as to have a surface profile with no smoothness.

13. A method for manufacturing a modified asphalt, comprising: under such a condition that a kneading machine for an asphalt modifier and an asphalt mixing apparatus are both installed, the steps of manufacturing an asphalt modifier by means of said kneading machine in accordance with said method for manufacturing an asphalt modifier according to claim 5; and then charging said asphalt modifier directly into said asphalt mixing apparatus.

14. A modified asphalt composition comprising: 3 to 30 parts by weight of an asphalt modifier, said asphalt modifier comprising 100 parts by weight of a thermoplastic elastomer, 3 to 80 parts by weight of a carbon black with a particle size of 75 $\mu$m or less, and 10 to 100 parts by weight an oil, per 100 parts by weight of said thermoplastic elastomer; and 97 to 70 parts by weight of an asphalt.

15. A modified asphalt mixture comprising: said modified asphalt composition according to claim 14; and an aggregate.

**European Patent Office**

## EUROPEAN SEARCH REPORT

Application Number

EP 00 30 6386

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 377 655 A (HIMES GLENN R) 22 March 1983 (1983-03-22) | 1-12 | C08L53/02 |
| Y | * claims 1,2 ; column 2, line 54 - column 3, line 34 ; column 3, line 56-65 ; column 3, line 68 - column 4, line 1 ; column 4, line 14-28 ; column 5, line 1-3 ; embodiment 1 * | 13-15 | |
| Y | US 5 393 819 A (PETERS WILLIAM E) 28 February 1995 (1995-02-28) * example 1 * * column 3, line 30 - column 4, line 68 * | 13-15 | |
| X | US 4 216 131 A (HIMES GLENN R  ET AL) 5 August 1980 (1980-08-05) | 1-12 | |
| Y | * claims 1,2 ; column 2, line 20-68 ; column 3, line 61 - column 4, line 5 ; column 4, line 13-20 * * column 5, line 14-16 * | 13-15 | |
| Y | US 5 451 621 A (USMANI ARTHUR M  ET AL) 19 September 1995 (1995-09-19) * claims 1-4 ; column 4, line 58 - column 5, line 5 * * column 4, line 25,26 * | 13-15 | TECHNICAL FIELDS SEARCHED (Int.Cl.7) C08L B60C |
| X | US 4 495 323 A (COLLINS JAMES H) 22 January 1985 (1985-01-22) | 1-12 | |
| Y | * claims 1,2,4 ; column 2, line 33 - column 3, line 48 ; column 4, line 11-23 ; column 4, line 31-42 * * column 4, line 31-42 * | 13,14 | |

-/--

The present search report has been drawn up for all claims

| Place of search | Date of completion of the search | Examiner |
|---|---|---|
| THE HAGUE | 21 September 2000 | Hammond, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 30 6386

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | PATENT ABSTRACTS OF JAPAN vol. 1998, no. 12, 31 October 1998 (1998-10-31) & JP 10 195301 A (BRIDGESTONE CORP), 28 July 1998 (1998-07-28) * abstract * | 13,14 | |
| X | US 4 377 658 A (COLLINS JAMES H) 22 March 1983 (1983-03-22) | 1-12 | |
| Y | * claims 1,2 ; column 2, line 40 - column 3, line 49 ; column 4, line 45-57 * * column 4, line 65 - column 5, line 4 * | 13,14 | |
| D,Y | PATENT ABSTRACTS OF JAPAN vol. 018, no. 385 (C-1227), 20 July 1994 (1994-07-20) & JP 06 107953 A (NISSHIN KASEI KK), 19 April 1994 (1994-04-19) * abstract * | 13,14 | |
| X | US 4 216 132 A (HIMES GLENN R ET AL) 5 August 1980 (1980-08-05) * claims 1,2,9 ; column 2, line 19-66 ; column 4, line 1-18 ; column 4, line 27-33 ; column 5, line 33-35 ; embodiment 1 * | 1-4 | TECHNICAL FIELDS SEARCHED (Int.Cl.7) |
| X | GB 1 092 563 A (SHELL INTERNATIONAL RESEARCH) 29 November 1967 (1967-11-29) * page 1, line 40 - page 3, line 14 ; page 3, line 28-32 ; claims 1-5 * * page 3, line 74-83 * | 1-3,5-12 | |

The present search report has been drawn up for all claims

| Place of search | Date of completion of the search | Examiner |
|---|---|---|
| THE HAGUE | 21 September 2000 | Hammond, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................
& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 00 30 6386

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2000

| Patent document cited in search report | | Publication date | Patent family member(s) | | Publication date |
|---|---|---|---|---|---|
| US 4377655 | A | 22-03-1983 | NONE | | |
| US 5393819 | A | 28-02-1995 | NONE | | |
| US 4216131 | A | 05-08-1980 | NONE | | |
| US 5451621 | A | 19-09-1995 | CA | 2156009 A | 16-02-1996 |
| US 4495323 | A | 22-01-1985 | NONE | | |
| JP 10195301 | A | 28-07-1998 | NONE | | |
| US 4377658 | A | 22-03-1983 | NONE | | |
| JP 06107953 | A | 19-04-1994 | NONE | | |
| US 4216132 | A | 05-08-1980 | NONE | | |
| GB 1092563 | A | | AT | 277807 B | 12-01-1970 |
| | | | BE | 674763 A | 05-07-1966 |
| | | | CH | 487196 A | 15-03-1970 |
| | | | DE | 1620851 A | 03-09-1970 |
| | | | DK | 115887 B | 17-11-1969 |
| | | | FR | 1499884 A | 18-01-1968 |
| | | | NL | 6600172 A | 07-07-1966 |
| | | | NO | 122556 B | 12-07-1971 |
| | | | SE | 326555 B | 27-07-1970 |
| | | | DK | 118848 B | 12-10-1970 |

EPO FORM P0459

For more details about this annex : see Official Journal of the European Patent Office, No. 12/82